# EUROPÄISCHE PATENTSCHRIFT

(11) **EP 1 196 309 B1**
(45) Veröffentlichungstag und Bekanntmachung des Hinweises auf die Patenterteilung: **14.01.2004**
(21) Anmeldenummer: 99940066.6
(22) Anmeldetag: 27.07.1999
(51) Int. Cl.: B60R 11/00, F16F 7/10, F16F 15/08

(54) **BODENVERDICHTUNGSVORRICHTUNG MIT SCHWINGUNGSISOLIERENDER HALTERUNG FÜR EINE STARTERBATTERIE**
SOIL PACKING DEVICE WITH A VIBRATION ISOLATING MOUNTING FOR A STARTER BATTERY
DISPOSITIF DE COMPACTAGE DU SOL POURVU D'UNE FIXATION POUR BATTERIE DE DEMARRAGE QUI ISOLE DES VIBRATIONS

(43) Veröffentlichungstag der Anmeldung: 17.04.2002
(73) Patentinhaber: Wacker Construction Equipment AG, 80809 München (DE)
(72) Erfinder: BROMBERGER, Thomas, D-93358 Train (DE); MAURER, Thomas, D-80995 München (DE); JUNGWIRTH, Norbert, D-85716 Unterschlei heim (DE); BLAFFERT, Klaus, D-80939 München (DE)
(74) Vertreter: Hoffmann, Jörg Peter, Dr. Ing.
(86) Internationale Anmeldenummer: PCT/EP1999/005389
(87) Internationale Veröffentlichungsnummer: WO 2001/007293

(56) Entgegenhaltungen:
- DE-A- 4 340 007
- DE-A- 19 540 927
- DE-U- 29 804 047
- PATENT ABSTRACTS OF JAPAN vol. 014, no. 486 (M-1038), 23. Oktober 1990 (1990-10-23) & JP 02 197446 A (NISSAN MOTOR CO LTD), 6. August 1990 (1990-08-06)
- PATENT ABSTRACTS OF JAPAN vol. 1998, no. 05, 30. April 1998 (1998-04-30) & JP 10 016689 A (SANYO ELECTRIC CO LTD), 20. Januar 1998 (1998-01-20)
- PATENT ABSTRACTS OF JAPAN vol. 015, no. 468 (M-1184), 27. November 1991 (1991-11-27) & JP 03 200451 A (NISSAN MOTOR CO LTD), 2. September 1991 (1991-09-02)

## Beschreibung

Die Erfindung betrifft eine Bodenverdichtungsvorrichtung mit einer Halterung für eine Starterbatterie.

Derartige Bodenverdichtungsvorrichtungen, z. B. aus der DE-U-298 04 047 bekannte Vibrationsplatten sowie Vibrationsstampfer oder Vibrationswalzen werden üblicherweise durch einen Verbrennungsmotor angetrieben, der über einen von einer Starterbatterie gespeisten Elektrostarter gestartet wird. Bei den Batterien handelt es sich meist um Gitterplattenakkumulatoren, die für beim Betrieb von Kraftfahrzeugen im Straßenverkehr auftretende Belastungen ausgelegt sind. Beim Betrieb einer Bodenverdichtungsvorrichtung treten jedoch sehr hohe Beschleunigungsbelastungen auf, die je nach Art der Aufnahme der Batterie in der Vorrichtung an die Batterie weitergegeben werden, so daß die Gitterstruktur der Batterien rasch Schaden tragen kann. Aus diesem Grund wurden zum einen spezielle rüttelfeste Batterien entwickelt, die jedoch sehr teuer sind. Andererseits gibt es die Möglichkeit, die Batterien auf sogenannten Dämpfungskissen, d. h. auf Platten aus elastischem Material in der Aufnahme weich zu lagern. Auch in diesem Fall jedoch werden meist unzulässig hohe Beschleunigungsbelastungen auf die Batterie übertragen. Zudem sind die Dämpfungskissen mit hohem Aufwand in der Aufnahme zu befestigen.

Ähnliche Probleme bestehen bei anderen schwingungsbehafteten Arbeitsgeräten, wie zum Beispiel bei Flügelglättern zum Glätten von Beton, bei Fugenschneidern oder bei Generatoren.

Aus der DE 195 40 927 A1 ist ein Schwingungstilger für ein Kraftfahrzeug bekannt, bei dem eine als Tilgermasse dienende Fahrzeugbatterie in einem Käfig gehalten ist, welcher sich über elastische Lagerelemente an den Wänden des Fahrzeugs abstützt. Die Batterie erzeugt aufgrund ihrer Trägheit eine Gegenschwingung, die der Fahrzeugschwingung überlagert wird und somit die Fahrzeugschwingungen mildert.

Ein ähnlicher Aufbau ist aus der DE 43 40 007 A1 bekannt. Die Kraftfahrzeugschwingungen sind im Dauerbetrieb erheblich schwächer als die Schwingungen. die einen starken Schwingungserreger tragenden Bodenverdichtungsvorrichtungen auftreten.

Eine weitere Schwingungstilgeranordnung für Kraftfahrzeuge ist aus der JP-A-02197446 bekannt, bei der die Masse einer Starterbatterie als Dämpfungsmasse zum Mindern von Fahrzeugschwingungen genutzt wird.

Die JP-A-10016689 offenbart eine schwingungsisolierende Halterung für eine Starterbatterie, welche in einen geschlossenen Kasten einsetzbar ist, der wiederum zum Dämpfen von schwachen Stößen auf Federn aufsitzt. Um eine Zerstörung der Batterie im Falle einer Kollision des Fahrzeugs zu vermeiden, ist in der Hauptbewegungsrichtung des Fahrzeugs mit Abstand zu dem Kasten ein Airbag angeordnet, der bei einem Unfall aufgeblasen wird und die Batterie mitsamt dem Kasten auffängt.

Der Erfindung liegt die Aufgabe zugrunde, eine Bodenverdichtungsvorrichtung anzugeben, bei der ein übermäßig starkes Einwirken von Beschleunigungsbelastungen auf eine Starterbatterie vermieden wird, ohne daß ein großer baulicher Aufwand erforderlich ist.

Die Lösung der Aufgabe wird erfindungsgemäß durch die Merkmale von Patentanspruch 1 angegeben. Vorteilhafte Ausführungsformen der Erfindung sind den Unteransprüchen zu entnehmen.

Erfindungsgemäß wird ein schwingungsbehaftetes Arbeitsgerät, insbesondere eine Bodenverdichtungsvorrichtung angegeben, mit einer an einer Oberseite der Bodenverdichtungsvorrichtung vorgesehenen Aufnahme, einem in die Aufnahme einsetzbaren Käfig zum Halten einer Batterie, einem zwischen wenigstens einer Außenseite des Käfigs und wenigstens einer Innenseite der Aufnahme ausgebildeten Spalt, und mit wenigstens einem in dem Spalt angeordneten Feder-Dämpferelement, das nicht an der Aufnahme befestigt ist.

Dies hat den Vorteil, daß die Batterie sehr einfach zusammen mit dem als Kasten dienenden Käfig aus der Aufnahme herausgehoben bzw. in die Aufnahme eingesetzt werden kann. Eine zusätzliche Arretierung ist nicht erforderlich. Die Feder-Dämpferelemente sind dabei vorzugsweise am Käfig zu befestigen. Sie können jedoch auch lose in den Spalt zwischen Käfig und Aufnahme eingesetzt werden.

Vorteilhafterweise sind mehrere Feder-Dämpferelemente an der wenigstens einen Außenseite des Käfigs befestigt. Dies ermöglicht es, den Käfig mit der darin gehaltenen Batterie außerhalb der Aufnahme vorzubereiten und mit für das jeweilige Arbeitsgerät geeigneten Feder-Dämpferelementen auszustatten. Danach kann der Käfig in die Aufnahme eingesetzt werden.

Da die Feder-Dämpferelemente nicht an der Aufnahme zu befestigen sind, kann die mit dem Arbeitsgerät fest verbundene Aufnahme durch eine einfache Vertiefung ausgebildet sein, an der keine weiteren baulichen Maßnahmen vorzunehmen sind. Die Funktion der Schwingungsdämpfung wird ausschließlich durch den Käfig und die an diesem befestigten Feder-Dämpferelemente übernommen. so daß die in den Käfig eingesetzte Batterie vor hohen Beschleunigungsbelastungen bewahrt wird.

Eine vorteilhafte Ausführungsform der Erfindung ist dadurch gekennzeichnet, daß die Außenseiten des Käfigs wenigstens eine Bodenwand und mehrere Seitenwände umfassen, an denen jeweils wenigstens ein Feder-Dämpferelement befestigt ist. Dies ermöglicht es, Schwingungen in nahezu sämtlichen Raumrichtungen, die von der Aufnahme auf den Käfig ausgeübt werden, aufzunehmen.

Die Feder-Dämpferelemente bestehen vorteilhafterweise aus einem gummielastischen Material. Sie können in geeigneter Weise ausgestaltet werden, um die gewünschten Feder- und Dämpfungseigenschaften zur Verfügung zu stellen. Darüber hinaus können die Feder-Dämpferelemente am Käfig ausgetauscht werden, um den Käfig für andere Anwendungsfälle anzupassen. Die Gestaltung der Feder-Dämpferelemente sollte insbesondere derart erfolgen, daß die Eigenfrequenz des Käfigs in der Aufnahme kleiner ist als die anregende Frequenz. Dabei muß eine übermäßige Schwingungsamplitude der Batterie durch Wahl der passenden Dämpfung in den Feder-Dämpferelementen und durch entsprechende Anbringung der Feder-Dämpferelemente vermieden werden.

Eine besonders vorteilhafte Ausführungsform der Erfindung ist dadurch gekennzeichnet, daß der Käfig aus zwei getrennten Hälften besteht, zwischen die die Batterie einsetzbar ist. Dadurch kann der gleiche Käfig an Batterien verschiedener Größe angepaßt werden, da handelsübliche Starterbatterien meist je nach Kapazität hinsichtlich der Baulänge variieren, während ihre Höhe und ihre Breite konstant ist. Die Käfighälften können daher in verschiedenen Arbeitsgeräten mit verschieden langen Starterbatterien verwendet werden, ohne daß jeweils die Käfighälften selbst modifiziert werden müßten.

Zur besseren Handhabbarkeit ist es sehr zweckmäßig, wenn die Käfighälften oder der Käfig Tragegriffe aufweisen.

Diese und weitere Merkmale und Vorteile der Erfindung werden nachfolgend unter Zuhilfenahme der begleitenden Figuren anhand einer bevorzugten Ausführungsform näher erläutert. Es zeigen:
- **Fig. 1**: einen Teil eines erfindungsgemäßen Arbeitsgeräts mit einem aus zwei Käfighälften bestehenden Käfig und einer Batterie in Explosionsdarstellung;
- **Fig. 2**: eine vergrößerte Explosionsdarstellung des Käfigs und der Batterie.

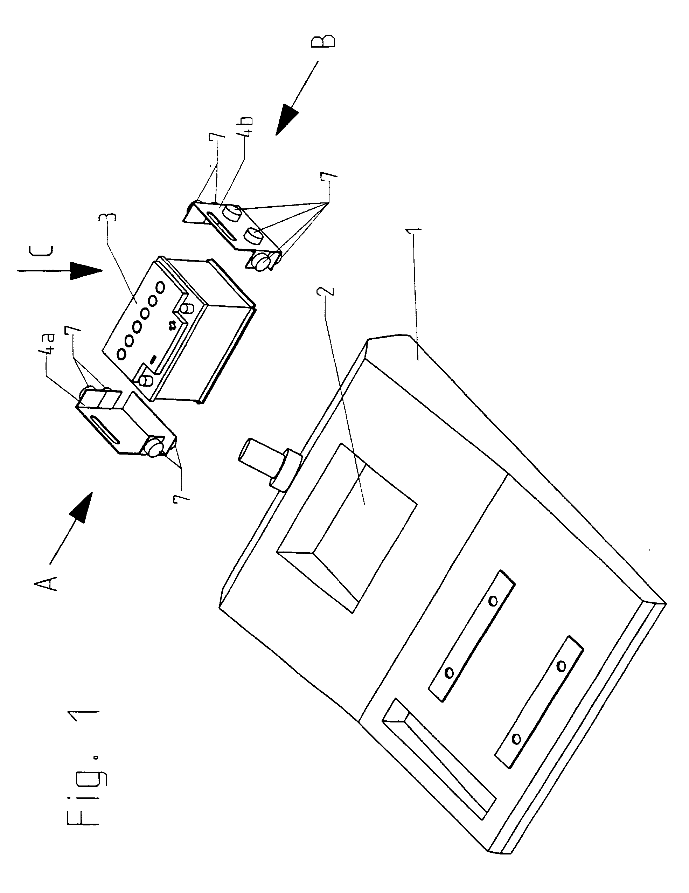

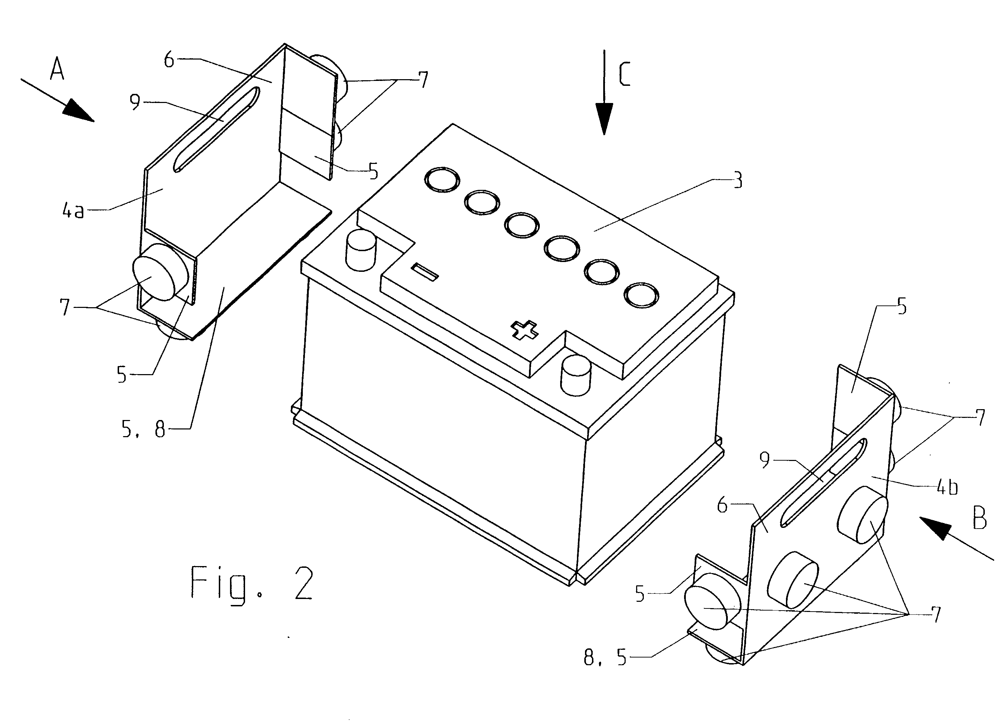

Da Fig. 2 im wesentlichen nur eine Ausschnittsvergrößerung aus Fig. 1 darstellt, werden nachfolgend die Fig. 1 und 2 gemeinsam erläutert, wobei übereinstimmende Bezugszeichen verwendet werden.

Auf der Oberseite einer als schwingungsbehaftetes Arbeitsgerät bzw. als Bodenverdichtungsvorrichtung dienenden Vibrationsplatte 1, von der in Fig. 1 lediglich der obere Teil dargestellt ist, ist eine Aufnahme 2 in Form einer Ausnehmung ausgebildet. Die Aufnahme 2 kann aber auch in Form eines auf der Vibrationsplatte 1 befestigten Gehäuses oder Kastens ausgebildet sein. In Fig. 1 sind die bei Vibrationsplatten üblicherweise vorhandenen Aufbauten und Abdeckungen sowie die elektrischen Anschlüsse für eine Batterie 3 zur Vereinfachung der Darstellung weggelassen.

In die Aufnahme 2 ist ein aus zwei Käfighälften 4a, 4b bestehender Käfig 4 einsetzbar.

Der Käfig 4 kann auch in Form eines Kastens einteilig ausgeführt werden. Die in den Figuren dargestellte zweiteilige Ausführung mit Käfighälften 4a, 4b hat jedoch den Vorteil, daß die Käfighälften 4a, 4b auch bei anderen Arbeitsgerättypen mit anderen Batterien, insbesondere Batterien mit anderer Baulänge verwendet werden können, ohne daß die Käfighälften 4a. 4b selbst verändert werden müssen, da ihr Abstand frei variabel ist. Jede der Käfighälften 4a, 4b berührt dabei vier Seiten der Batterie 3.

Die Innenseite des Käfigs 4 bzw. der Käfighälften 4a, 4b ist so ausgebildet, daß die Batterie 3 eingesetzt werden kann.

Die Außenabmessungen des Käfigs 4 und die Innenabmessungen der Aufnahme 2 sind so bemessen, daß zwischen den Seitenwänden der Aufnahme 2 und des Käfigs 4 ein in den Figuren nicht dargestellter Spalt bzw. Zwischenraum ausgebildet ist. Darüber hinaus ist durch geeignete Wahl der Einbauhöhe auch unter dem Käfig ein Spalt möglich, in dem später erläuterte Feder-Dämpferelemente 7 unterzubringen sind.

Bei der in den Figuren gezeigten besonders geeigneten Ausführungsform bestehen die Käfighälften 4a, 4b aus einem Metallblech, das zur Erzeugung der räumlichen Struktur gebogene Seitenlaschen 5 aufweist. Die Seitenlaschen 5 können auch angeschweißt sein. Selbstverständlich sind viele weitere günstige Ausführungsformen denkbar, die der Fachmann je nach Fertigungsmöglichkeit wählen kann, wobei auch Kunststoff zum Einsatz kommen kann.

An den Außenseiten der als Bodenwand und als Seitenwände dienenden Seitenlaschen 5 sowie an einer Stirnwand 6 sind Feder-Dämpferelemente 7 befestigt, die nach Einsetzen des Käfigs 4 in die Aufnahme 2 in dem Spalt angeordnet sind und mit ihren freien Stirnseiten die entsprechenden Innenseiten der Aufnahme 2 berühren.

Die Feder-Dämpferelemente 7 bestehen vorzugsweise aus einem gummielastischen Material. Jedoch sind auch andere, dem Fachmann geläufige Materialien und Gestaltungsformen möglich. In den Figuren sind die Feder-Dämpferelemente 7 zylindrisch ausgebildet. Je nach Anwendungsfall kann es auch zweckmäßig sein, die Feder-Dämpferelemente 7 mit über der Höhe veränderlichem Querschnitt auszustatten und z.B. konische oder pyramidenförmige Elemente zu verwenden.

Vorzugsweise sind die Feder-Dämpferelemente 7 an der Unterseite einer Bodenwand 8 sowie an allen Außenseiten der Seitenwände 5, 6 des Käfigs 4 befestigt, um Beschleunigungsbelastungen, die von den in Fig. 1 erkennbaren, fünf Seitenflächen der Aufnahme 2 ausgeübt werden, abzubauen. Die Aufnahme 2 ist - wie in Fig. 1 erkennbar - nach oben frei zugänglich. Bei anderen Ausführungsformen jedoch wird die Batterie 3 durch einen Deckel in der Aufnahme 2 festgeklemmt.

Zur besseren Handhabbarkeit sind an dem Käfig 4 zwei Tragegriffe 9 ausgebildet. Der Bediener führt damit die beiden Käfighälften 4a, 4b in Richtung der Pfeile A, B zueinander, bis die Batterie 3 durch den Käfig 4 umschlossen ist. Anschließend senkt der Bediener den Käfig 4 mit der Batterie 3 in Pfeilrichtung C in die Aufnahme 2 ein. Danach werden in an sich bekannter Weise die nicht dargestellten elektrischen Anschlüsse mit der Batterie 3 verbunden.

Die erfindungsgemäße schwingungsisolierende Halterung für eine Starterbatterie ermöglicht die Verwendung einer handelsüblichen Starterbatterie, ohne daß im Betrieb die sonst üblicherweise auftretenden Schädigungen zu beobachten sind. Die Halterung ist kostengünstig aufgebaut, ermöglicht eine leichte Montierbarkeit und läßt sich leicht nachrüsten. Zudem kann die Halterung ohne bauliche Veränderung bei verschiedenen Typen von Arbeitsgeräten eingesetzt werden.

Die Feder-Dämpferelemente 7 sind leicht abstimmbar, ermöglichen hohe Schwingwege und erlauben einerseits eine weiche Aufhängung der Batterie 3, für die andererseits eine geeignete Dämpfung ein zu starkes Aufschaukeln vermeidet.

Da der Käfig 4 keine feste Verbindung zu der Vibrationsplatte 1 aufweist, sondern lose in der Aufnahme 2 aufsitzt, ist ein schneller Austausch leicht möglich.

Bei der gezeigten Ausführungsform sind die Feder-Dämpferelemente 7 an der Außenseite des Käfigs 4 fest angebracht. Bei anderen - nicht dargestellten Ausführungsformen - können die Feder-Dämpferelemente 7 auch lose in den Spalt zwischen dem Käfig 4 und der Aufnahme 2 eingesetzt werden. Wiederum bei einer anderen, nicht dargestellten Ausführungsform der Erfindung können die Feder-Dämpferelemente 7 auch fest an den Wänden der Aufnahme 2 befestigt sein. Der Käfig 4 mit der Batterie 3 wird dann lose auf die Feder-Dämpferelemente 7 aufgesetzt.

## Patentansprüche

1. Bodenverdichtungsvorrichtung, mit
- einer an einer Oberseite der Bodenverdichtungsvorrichtung vorgesehenen Aufnahme (2),
- einem in die Aufnahme (2) einsetzbaren Käfig (4, 4a, 4b) zum Halten einer Batterie (3),
- einem zwischen wenigstens einer Außenseite des Käfigs (4, 4a, 4b) und wenigstens einer Innenseite der Aufnahme (2) ausgebildeten Spalt, und mit
- wenigstens einem in dem Spalt angeordneten Feder-Dämpferelement (7), das nicht an der Aufnahme (2) befestigt ist.

2. Bodenverdichtungsvorrichtung nach Anspruch 1, **dadurch gekennzeichnet, daß** mehrere Feder-Dämpferelemente (7) an der wenigstens einen Außenseite des Käfigs (4, 4a, 4b) und nicht an der Aufnahme (2) befestigt sind.

3. Bodenverdichtungsvorrichtung nach Anspruch 1 oder 2, **dadurch gekennzeichnet, daß** die Außenseiten des Käfigs (4, 4a, 4b) wenigstens eine Bodenwand (8) und mehrere Seitenwände (5, 6) umfassen, an denen jeweils wenigstens ein Feder-Dämpferelement (7) befestigt ist.

4. Bodenverdichtungsvorrichtung nach einem der Ansprüche 1 bis 3, **dadurch gekennzeichnet, daß** die Feder-Dämpferelemente (7) aus einem gummielastischen Material bestehen.

5. Bodenverdichtungsvorrichtung nach einem der Ansprüche 1 bis 4, **dadurch gekennzeichnet, daß** der Käfig (4, 4a, 4b) wenigstens zwei Tragegriffe (9) aufweist.

6. Bodenverdichtungsvorrichtung nach einem der Ansprüche 1 bis 5, **dadurch gekennzeichnet, daß** der Käfig (4) aus zwei getrennten Hälften (4a, 4b) besteht, zwischen die die Batterie (3) einsetzbar ist.

7. Bodenverdichtungsvorrichtung nach Anspruch 6, **dadurch gekennzeichnet, daß** jede der Hälften (4a, 4b) eine Bodenwand (8) und drei Seitenwände (5, 6) aufweist, an denen jeweils wenigstens ein Feder-Dämpferelement (7) befestigt ist.

## Claims

1. Ground compacting device having
- a receiving means (2) provided in an upper side of the ground compacting device,
- a cage (4, 4a, 4b) which can be inserted into the receiving means (2) for holding a battery (3),
- a gap formed between at least one outer side of the cage (4, 4a, 4b) and at least one inner side of the receiving means (2), and having
- at least one shock absorber element (7) which is disposed in the gap and is not fixed onto the receiving means (2).

2. Ground compacting device as claimed in Claim 1, **characterised in that** several shock absorber elements (7) are fixed onto the at least one outer side of the cage (4, 4a, 4b) and not onto the receiving means (2).

3. Ground compacting device as claimed in Claim 1 or 2, **characterised in that** the outer sides of the cage (4, 4a, 4b) contain at least one base wall (8) and several lateral walls (5, 6) on each of which at least one shock absorber element (7) is fixed.

4. Ground compacting device as claimed in any one of Claims 1 to 3, **characterised in that** the shock absorber elements (7) consist of a rubber resilient material.

5. Ground compacting device as claimed in any one of Claims 1 to 4, **characterised in that** the cage (4, 4a, 4b) comprises at least two carrying handles (9).

6. Ground compacting device as claimed in any one of Claims 1 to 5, **characterised in that** the cage (4) consists of two separate halves (4a, 4b) between which the battery (3) can be inserted.

7. Ground compacting device as claimed in Claim 6, **characterised in that** each of the halves (4a, 4b) comprises one base wall (8) and three lateral walls (5, 6) on each of which at least one shock absorber element (7) is fixed.

## Revendications

1. Dispositif de compactage du sol comportant
- un logement (2) prévu sur une face supérieure du dispositif de compactage du sol,
- une cage (4, 4a, 4b) pouvant être insérée dans le logement (2) pour fixer une batterie (3),
- une fente formée entre au moins une face extérieure de la cage (4, 4a, 4b) et au moins une face intérieure du logement (2), et comportant
- au moins un élément amortisseur à ressort (7) disposé dans la fente, qui n'est pas fixé au logement (2).

2. Dispositif de compactage du sol selon la revendication 1, **caractérisé en ce que** plusieurs éléments amortisseurs à ressort (7) sont fixés sur au moins une face extérieure de la cage (4, 4a, 4b) et non sur le logement (2).

3. Dispositif de compactage du sol selon la revendication 1 ou 2, **caractérisé en ce que** les faces extérieures de la cage (4, 4a, 4b) comprennent au moins une paroi de fond (8) et plusieurs parois latérales (5, 6) à chacune desquelles est fixé au moins un élément amortisseur à ressort (7).

4. Dispositif de compactage du sol selon l'une des revendications 1 à 3, **caractérisé en ce que** les éléments amortisseurs à ressort (7) sont constitués d'un matériau présentant l'élasticité du caoutchouc.

5. Dispositif de compactage du sol selon l'une des revendications 1 à 4, **caractérisé en ce que** la cage (4, 4a, 4b) comporte au moins deux poignées de portage (9).

6. Dispositif de compactage du sol selon l'une des revendications 1 à 5, **caractérisé en ce que** la cage (4) est constituée de deux moitiés (4a, 4b) séparées entre lesquelles on peut insérer la batterie (3).

7. Dispositif de compactage du sol selon la revendication 6, **caractérisé en ce que** chacune des moitiés (4a, 4b) comporte une paroi de fond (8) et trois parois latérales (5, 6) à chacune desquelles est fixé au moins un élément amortisseur à ressort (7).
